# EUROPEAN PATENT SPECIFICATION

(11) **EP 3 647 270 B1**
(45) Date of publication and mention of the grant of the patent: **26.07.2023**
(21) Application number: 19206386.5
(22) Date of filing: 31.10.2019
(51) Int. Cl.: C01G 53/00

(54) **POSITIVE ACTIVE MATERIAL FOR RECHARGEABLE LITHIUM BATTERY, METHOD OF PREPARING THE SAME AND RECHARGEABLE LITHIUM BATTERY INCLUDING THE SAME**
POSITIV AKTIVES MATERIAL FÜR EINE WIEDERAUFLADBARE LITHIUMBATTERIE, HERSTELLUNGSVERFAHREN DAFÜR UND WIEDERAUFLADBARE LITHIUMBATTERIE DAMIT
MATÉRIAU ACTIF POSITIF POUR BATTERIE AU LITHIUM RECHARGEABLE, SON PROCÉDÉ DE PRÉPARATION ET BATTERIE AU LITHIUM RECHARGEABLE LE COMPRENANT

(30) Priority: 02.11.2018 KR 20180133746
(43) Date of publication of application: 06.05.2020
(73) Proprietor: Samsung SDI Co., Ltd., Gyeonggi-do 17084 (KR)
(72) Inventor: Hong, Mingzi, 17084 Yongin-si, Gyeonggi-do (KR); Kim, Young-Ki, 17084 Yongin-si, Gyeonggi-do (KR); Park, Jungjoon, 17084 Yongin-si, Gyeonggi-do (KR); Lee, Soonrewl, 17084 Yongin-si, Gyeonggi-do (KR); Chae, Youngjoo, 17084 Yongin-si, Gyeonggi-do (KR); Choi, Ickkyu, 17084 Yongin-si, Gyeonggi-do (KR); Hong, Soonkie, 17084 Yongin-si, Gyeonggi-do (KR)
(74) Representative: Gulde & Partner

(56) References cited:
- WO-A1-2010/029745
- US-A1- 2013 323 598
- US-A1- 2014 158 932

## Description

### BACKGROUND OF THE INVENTION

### (a) Field of the Invention

A positive active material for a rechargeable lithium battery, a method of preparing the same, and a rechargeable lithium battery including the same are disclosed.

### (b) Description of the Related Art

In order to meet down-sizing and high performance of various devices, rechargeable lithium batteries have become increasingly important in terms of down-sizing and weight reduction as well as high energy density. In addition, high capacity and high temperature stability of rechargeable lithium batteries, and stability at a high voltage become important to apply to electric vehicles and the like.

Various positive active materials have been investigated to realize rechargeable lithium batteries for applications to the uses.

Nickel-based lithium transition metal oxide including Ni, Co, and Mn simultaneously provides higher discharge capacity per unit weight than LiCoO₂, but provides low capacity per unit volume due to a low filling density and exhibits low discharge capacity in a rechargeable lithium battery. In addition, rechargeable lithium batteries including the nickel-based lithium transition metal oxide may show deteriorated safety during operation at a high voltage.

In particular, when a Ni atom concentration is about 33 at% to about 60 at%, charge and discharge efficiency of the rechargeable battery employing it is less than or equal to about 90%, a cation mixing is about 5%, and the Li/transition metal mole ratio of 1.01 to 1.05. Theoretically, an ideal ratio of Li/transition metal is 1.00. However, in a conventional synthesis method of a Ni-based positive active material, since Li is excessively mixed relative to the transition metal, charge and discharge efficiency of a rechargeable lithium battery employing the same may be deteriorated and a cation mixing may be increased.

Therefore, there are increasing needs for a positive active material having an ideal layered structure and a high efficiency rechargeable lithium battery employing the same, by decreasing the cation mixing of the positive active material. Examples may be found in US 2013/323598 A1, WO 2010/029745 A1 or US 2014/158932 A1.

### SUMMARY OF THE INVENTION

An embodiment provides a positive active material for a rechargeable lithium battery having improved charge and discharge capacity, charge and discharge efficiency, and cycle-life.

Another embodiment provides a method of preparing the positive active material.

Another embodiment provides a rechargeable lithium battery including the positive active material.

An embodiment provides a positive active material for a rechargeable lithium battery including a first compound represented by Chemical Formula 1 in form of a secondary particle in which a plurality of primary particles is assembled and a second compound represented by Chemical Formula 2 in form of a secondary particle in which a plurality of primary particles is assembled, wherein the secondary particle of the second compound has a smaller average particle diameter (D50) than the secondary particle of the first compound measured by using a scanning electron microscope (SEM), wherein at least one of the secondary particle of the first compound and the secondary particle of the second compound includes a core and a surface layer surrounding the core, wherein a Ni atom concentration (at%) of the metals except Li of the surface layer is higher than a Ni atom concentration (at%) of the metals except Li of the core, and a cation mixing is less than or equal to 3 %, wherein cation mixing means a ratio (%) of a portion of nickel ions (Ni²⁺) mixed to a Li site within the crystal lattice of the positive active material measured by a X-ray diffraction (XRD) analysis and determined by Rietveld analysis.

[Chemical Formula 1] Liₐ₁Niₓ₁CO_{y1}M¹_{1-x1-y1}O₂

In Chemical Formula 1, 0.9 ≤ a1 ≤ 1.05, 0.3 ≤ x1 ≤ 0.95, 0.1 ≤ y1 ≤ 0.3, and M¹ is at least one metal element selected from Mn, Al, Cr, Fe, V, Mg, Ti, Zr, Nb, Mo, W, Cu, Zn, Ga, In, Sn, La, and Ce.

[Chemical Formula 2] Liₐ₂Niₓ₂CO_{y2}M²_{1-x2-y2}O₂

In Chemical Formula 2, 0.9 ≤ a2 ≤ 1.05, 0.3 ≤ x2 ≤ 0.95, 0.1 ≤ y2 ≤ 0.3, and M² is at least one metal element selected from Mn, Al, Cr, Fe, V, Mg, Ti, Zr, Nb, Mo, W, Cu, Zn, Ga, In, Sn, La, and Ce)

The positive active material may have a Ni atom concentration of the metals except Li ranging from 30 at% to 60 at%.

A ratio of the Ni atom concentration of the metals except Li of the surface layer relative to the Ni atom concentration of the metals except Li of the core may be 1.03 to 1.20.

The secondary particle of the first compound may have an average particle diameter (D50) of 15 µm to 20 µm.

The secondary particle of the second compound may have an average particle diameter (D50) of 2 µm to 5 µm.

The first compound and the second compound may be mixed in a weight ratio of 90 : 10 to 50 : 50.

The secondary particle of the second compound may have a needle-shape, a sheet-shape, or a combination thereof.

The surface layer may be a region corresponding to a depth of 200 nm from the surface of the first compound or the second compound.

Another embodiment provides a method of preparing a positive active material which includes the steps of:
mixing a compound 1A represented by Chemical Formula 1A, a compound 2A represented by Chemical Formula 2A wherein the particles of the second compound 2A has a smaller particle diameter than the particles of the compound 1A, and a lithium salt to prepare a mixture; first heat-treating the mixture under a rapid temperature-increasing condition to prepare a first fired product including residual lithium; and
second heat-treating the first fired product to prepare the positive active material.

[Chemical Formula 1A] Niₓ₁CO_{y1}M¹_{1-x1-y1}(OH)₂

In Chemical Formula 1A, 0.3 ≤ x1 ≤ 0.95, 0.1 ≤ y1 ≤0.3, and M¹ is at least one metal element selected from Mn, Al, Cr, Fe, V, Mg, Ti, Zr, Nb, Mo, W, Cu, Zn, Ga, In, Sn, La, and Ce.

[Chemical Formula 2A] Niₓ₂Co_{y2}M²_{1-x2-y2}(OH)₂

In Chemical Formula2A, 0.3 ≤ x2 ≤ 0.95, 0.1 ≤ y2 ≤0.3, and M² is at least one metal element selected from Mn, Al, Cr, Fe, V, Mg, Ti, Zr, Nb, Mo, W, Cu, Zn, Ga, In, Sn, La, and Ce.

The compound 1A and the compound 2A may be mixed in a weight ratio of 90 : 10 to 50 : 50.

In the mixture, a mole ratio of Li/(Ni + Co + Mn) may be greater than or equal to 0.99.

The rapid temperature-increasing condition may include increasing a temperature at about 4 °C/min to about 6 °C/min.

The first heat-treating may include a process of maintaining the mixture in an air atmosphere or an oxidizing gas atmosphere at about 800 °C to about 1000 °C for about 1 hour to about 4 hours.

The particles of compound 2A may have a needle-shape and/or a sheet-shape.

Another embodiment provides a rechargeable lithium battery including a positive electrode including the positive active material; a negative electrode including a negative active material; and an electrolyte.

The cation mixing of the positive active material may be reduced and thus a rechargeable battery with improved charge and discharge efficiency may be provided.

Residual lithium and gas generation amounts on the surface of the positive active material may be reduced and thus a positive active material for a rechargeable lithium battery having improved phase stability and cycle-life characteristics and a rechargeable lithium battery including the same are provided.

### BRIEF DESCRIPTION OF THE DRAWINGS

FIG. 1 is a schematic view illustrating a structure of a rechargeable lithium battery according to an embodiment.
FIG. 2 is a graph showing an X-ray photoelectron spectroscopy (XPS) analysis result of the positive active material prepared in Example 1.
FIG. 3 is a graph showing an XPS analysis result of the positive active material prepared in Example 2.
FIG. 4 is a graph showing room temperature cycle-life characteristics of half-cells manufactured in Example 3 and Comparative Example 2.
FIG. 5 is a graph showing high temperature cycle-life characteristics of half-cells manufactured in Example 3 and Comparative Example 2.

### DETAILED DESCRIPTION OF THE EMBODIMENTS

Hereinafter, embodiments of the present invention are described in detail. However, these embodiments are exemplary, the present invention is not limited thereto and the present invention is defined by the scope of claims.

As used herein, when specific definition is not otherwise provided, It will be understood that when an element such as a layer, film, region, or substrate is referred to as being "on" another element, it can be directly on the other element or intervening elements may also be present.

An embodiment provides a positive active material for a rechargeable lithium battery including a first compound represented by Chemical Formula 1 and a second compound represented by Chemical Formula 2 wherein the second compound has a smaller particle diameter than the first compound, wherein at least one of the first compound and the second compound includes a core and a surface layer surrounding the core, a Ni atom concentration (at%) of the metals except Li of the surface layer is higher than a Ni atom concentration (at%) of the metals except Li of the core, and cation mixing is less than or equal to 3 %.

[Chemical Formula 1] Liₐ₁Niₓ₁CO_{y1}M¹_{1-x1-y1}O₂

In Chemical Formula 1, 0.9 ≤ a1 ≤ 1.05, 0.3 ≤ x1 ≤ 0.95, 0.1 ≤ y1 ≤ 0.3, and M¹ is at least one metal element selected from Mn, Al, Cr, Fe, V, Mg, Ti, Zr, Nb, Mo, W, Cu, Zn, Ga, In, Sn, La, and Ce.

[Chemical Formula 2] Liₐ₂Niₓ₂CO_{y2}M²_{1-x2-y2}O₂

In Chemical Formula 2, 0.9 ≤ a2 ≤ 1.05, 0.3 ≤ x2 ≤ 0.95, 0.1 ≤ y2 ≤ 0.3, and M² is at least one metal element selected from Mn, Al, Cr, Fe, V, Mg, Ti, Zr, Nb, Mo, W, Cu, Zn, Ga, In, Sn, La, and Ce.

The x1 and x2 which indicate a Ni atom concentration (at%) of the metals except Li of the first compound and the second compound may be about 0.30 to about 0.95, for example about 0.30 to about 0.80, about 0.30 to about 0.70, about 0.30 to about 0.60, about 0.50 to about 0.60, or about 0.53 to about 0.57. In addition, the Ni atom concentration may be about 30 at% to about 95 at%, for example, about 30 at% to about 80 at%, about 30 at% to about 70 at%, about 30 at% to about 60 at%, about 50 at% to about 60 at%, or about 53 at% to about 57 at% based on 100 at% of the total metals except Li of the positive active material. Accordingly, a battery having improved charge and discharge capacity, efficiency and cycle-life characteristics may be provided.

A commercially available high nickel NCM-based positive active material has an initial charge and discharge efficiency of less than about 90 %; on the other hand, the positive active material according to an embodiment may have an initial charge and discharge efficiency of greater than or equal to about 92 %, and the producing cost may be saved by reducing Co amounts.

Meanwhile, an atomic concentration ratio Mn relative to Ni (Mn/Ni) may be about 0.36 to about 0.55 and an atomic concentration ratio Mn relative to Co (Mn/Co) may be about 0.8 to about 2.0.

The particles of the second compound may have a smaller average particle diameter (D50) than the first compound. The secondary particles of the first compound may have for example an average particle diameter of greater than or equal to about 15 µm, greater than or equal to about 16 µm, or greater than or equal to about 17 µm and less than or equal to about 20 µm, less than or equal to about 19 µm, or less than or equal to about 18 µm. The secondary particles of the second compound may have an average particle diameter of greater than or equal to about 2 µm or greater than or equal to about 3 µm and less than or equal to about 5 µm or less than or equal to about 4 µm. A difference between average particle diameters of the secondary particles of the first compound and the secondary particles of the second compound may be greater than or equal to about 10 µm, greater than or equal to about 11 µm, or greater than or equal to about 12 µm and less than or equal to about 18 µm, less than or equal to about 17 µm, or less than or equal to about 16 µm.

When the average particle diameters of the secondary particles of the first compound and the secondary particles of the second compound are in the ranges, a battery having improved a mixture density of electrode plate and high rate capability may be obtained.

According to an embodiment, a bimodal type positive active material including secondary particles of the first compound and the second compound having different average particle diameters may be obtained. By adopting such a bimodal type positive active material, the mixture density of the electrode plate may be improved to obtain a high-capacity battery.

On the other hand, the first compound and the second compound have a form of secondary particles in which a plurality of primary particles are assembled.

The average particle diameter refers to an average particle diameter of secondary particles.

As used herein, the particle diameter is measured by using a scanning electron microscope (SEM). The particle diameter refers to a diameter in case of a spherical shape, and in case of a shape such as a needle or sheet shape other than a spherical shape, the particle diameter means the longest length.

At least one of the secondary particles of the first compound and the secondary particles of the second compound includes a core and a surface layer surrounding the core. The surface layer may be a region within a depth of about 200 nm, for example, about 190 nm or about 180 nm from a surface of the first compound secondary particle or the second compound secondary particle, and the core may be a remaining region except the surface layer, that is, a region where is from about 200 nm, for example, about 190 nm or about 180 nm away from the surface of the secondary particle to the inner center of the secondary particle.

A Ni atom concentration (at%) of the surface layer is higher than a Ni atom concentration (at%) of the core. The positive active material is produced through two heat treatment processes. Residual lithium present on a surface of the first compound or the second compound secondary particle during the first heat treatment process may be reacted with transition metal hydroxide during the second heat-treatment (oxygen atmosphere) to be flowed into the secondary particle. Thereby, it is estimated that a Ni atom concentration (at%) of the finally produced positive active material surface layer is increased. In other words, as the positive active material has a higher Ni atom concentration in the surface layer (depth of about 200 nm) where lithium ions may be substantially reversibly intercalated/deintercalated than that in the core, charge and discharge capacity, efficiency, and cycle-life characteristics of the rechargeable battery may be improved.

A ratio of the Ni atom concentration of the metals except Li of the surface layer relative to the Ni atom concentration of the metals except Li of the core may be about 1.03 to about 1.20, for example about 1.03 to about 1.15, or about 1.05 to about 1.13. In this case, a battery having improved a mixture density of electrode plate and high rate capability may be obtained.

The positive active material has a cation mixing of less than or equal to 3 %, for example less than or equal to 2.9 %, less than or equal to 2.8 %, less than or equal to 2.7 %, less than or equal to 2.6 %, less than or equal to 2.5 %, or less than or equal to 2.4 %.

Meanwhile, the cation mixing refers to a phenomenon that Li⁺ (0.76 Å) and Ni²⁺ (0.69 Å) having a similar ion radius exchange their sites and form a crystal. Specifically, as nickel tends to prefer a divalent valence rather than a trivalent valence, a divalent nickel ion (Ni²⁺) having a similar ion radius to lithium ion may be mixed into empty space of the lithium layer having a lack of lithium caused by volatilizing a raw material of lithium salt during a high temperature firing. Resultantly, it may cause problems of producing lithium nickel oxide having a non-stoichiometric composition. In addition, nickel ion (Ni²⁺) mixed into the lithium layer may interrupt diffusion of lithium ion and also may greatly increase irreversibility of the ion oxidation-reduction reaction of the battery, so that capacity of the rechargeable battery may be deteriorated. The present invention may improve a problem of increasing the cation mixing by introducing a rapid temperature-increasing condition in the first heat-treatment and shortening a maintaining time of the first heat-treatment during producing a positive active material according to an embodiment. When the cation mixing is within the ranges, it is not worried to cause troubles relating to the cation mixing. Although the cation mixing may be reduced by performing the first heat-treatment in a short time and at a high temperature during producing the positive active material, a large amount of unreacted residual lithium is unfavorably created. However, the unreacted residual lithium may be removed by using as a lithium source reactive to an hydroxide precursor in the second heat-treatment, which will be detailed described in a method of preparing a positive active material according to an embodiment.

Meanwhile, the numeric range (%) of the cation mixing means a ratio (%) of a portion of nickel ion (Ni²⁺) mixed to the Li site and may be calculated by measuring by a X-ray diffraction (XRD) analysis.

The first compound and the second compound are mixed at a weight ratio of about 90 : 10 to about 50 : 50, for example, about 80 : 20 to about 70 : 30. When the mixing ratio of the first compound and the second compound is included within the range, a mixture density of the positive active material may be increased, and swelling phenomenon caused by gas generation under high voltage and high temperature conditions may be suppressed, so the obtained battery may have excellent capacity characteristics per a volume.

The second compound may have a needle-shape, a sheet-shape, or a combination thereof. When it has the above shape, a mixture density of the positive active material may be increased and charge and discharge capacity and efficiency characteristics of a battery may be improved.

A method of preparing a positive active material according to an embodiment is provided.

Hereinafter, the preparing method is explained in detail.

A method of preparing a positive active material according to an embodiment includes mixing a compound 1A represented by Chemical Formula 1A, a compound 2A represented by Chemical Formula 2A wherein the particles of compound 2A has a smaller particle diameter than the particles of the compound 1A, and a lithium salt to prepare a mixture, first heat-treating the mixture under a rapid temperature-increasing condition to prepare a first fired product including unreacted residual lithium; second heat-treating the first fired product.

[Chemical Formula 1A] Niₓ₁CO_{y1}M¹_{1-x1-y1}(OH)₂

In Chemical Formula 1A,
0.3 ≤ x1 ≤ 0.95, 0.1 ≤ y1 ≤ 0.3, and M¹ is at least one metal element selected from Mn, Al, Cr, Fe, V, Mg, Ti, Zr, Nb, Mo, W, Cu, Zn, Ga, In, Sn, La, and Ce.

[Chemical Formula 2A] Niₓ₂Co_{y2}M²_{1-x2-y2}(OH)₂

In Chemical Formula 2A,
0.3 ≤ x2 ≤ 0.95, 0.1 ≤ y2 ≤ 0.3, and M² is at least one metal element selected from Mn, Al, Cr, Fe, V, Mg, Ti, Zr, Nb, Mo, W, Cu, Zn, Ga, In, Sn, La, and Ce.

The lithium salt and the compound 1A and the compound 2A may be mixed in a mole ratio range of Li /(Ni + Co + Mn) of greater than or equal to about 0.99, for example, about 1.00 to about 1.25. When the lithium salt and the compound 1A and the compound 2A are mixed at the mole ratio, a large amount of unreacted lithium may be remained on a surface of a first fired product (at least one of the first compound and the second compound) produced from the first heat-treatment. Subsequently, the positive active material including the first compound and the second compound according to an embodiment may be obtained by reacting at least one of the compound 1A and the compound 2A with the unreacted residual lithium during the second heat-treating process.

The compound 1A and the compound 2A may be mixed in a weight ratio of about 90 : 10 to about 50 : 50, for example, about 80 : 20 to about 70 : 30. When the mixing ratio of the compound 1A and the compound 2A is within the range, a mixture density of the positive active material may be increased, and the swelling phenomenon caused by generating gas under the high voltage and high temperature conditions may be suppressed, and the obtained battery may have excellent capacity characteristics per a volume.

The lithium salt may include at least one of lithium carbonate, lithium hydroxide, and lithium nitrate.

The rapid temperature-increasing condition may include a process where a temperature of the mixture is raised from 25 °C to 100 °C to a first heat-treating reaction temperature of 800 °C to 1000 °C at 4 °C/min to 6 °C/min. By performing the rapid temperature-increasing in a short time, it may prevent the cation mixing, and the first fired product may include a large amount of unreacted residual lithium.

The first heat-treating may be performed under an air atmosphere or an oxidizing gas atmosphere for 1 hour to 4 hours. By performing the first heat-treating in a short time, it prevents the cation mixing, and the first fired product may include a large amount of unreacted residual lithium.

Meanwhile, the oxidizing gas atmosphere means gas atmosphere further including oxygen into air, the oxygen amount in the oxidizing gas atmosphere may be 20 volume% to 40 volume%.

As the first heat-treating is performed by heating under an air atmosphere or an oxidizing gas atmosphere at a high temperature (800 °C to 1000 °C) for a short time (1 hour to 4 hours), a large amount of unreacted nickel-based transition metal hydroxide (at least one of compound 1A and compound 2A) may exist. Accordingly, the change of Ni to Ni²⁺ may be suppressed, and a transfer of Ni²⁺ in a Li site may be suppressed to prevent a cation mixing. In addition, a large amount of the unreacted residual lithium may be included in the surface of the nickel-based lithium transition metal oxide (at least one of the first compound and the second compound).

An insertion height of the first heat-treating process may be greater than or equal to about 5 cm, for example, about 5 cm to about 8 cm. By performing the heat treatment process while adding the mixture into the heat treatment equipment in a height of greater than or equal to about 5 cm, the production amount is increased, which is economical for the production cost. In addition, as the unreacted lithium amount remained on the surface of the first fired product (at least one of the first compound and the second compound) is increased, a positive active material may be well formed during a second heat-treating process later.

The first fired product is subjected to a second heat-treatment. The second heat-treating process may be performed under conditions of heating at a rate of 5 °C/min to 10 °C/min from 25 °C to 100 °C to 700 °C to 900 °C, maintaining at 700 °C to 900 °C for 3 hours to 10 hours, and then cooling down at a rate of 2.5 °C/min to 5 °C/min until 25 °C to 100 °C.

The second heat-treating process may be performed under an oxygen atmosphere with an oxygen amount of 40 volume% to 100 volume%.

The particles of compound 2A may have a needle-shape, a sheet-shape, or a combination thereof. The second compound obtained from the method of preparing the positive active material may be maintained in the shape of the compound 2A as it was. When the first compound and the second compound are separately prepared, and then mixed and subjected to the heat treatment to provide a positive active material, the cation mixing amount may be greater than 3 %, generally, greater than or equal to 5 % even if using a nickel-based transition metal hydroxide precursor (Niₓ₂Co_{y2}M²_{1-x2-y2}(OH)₂) having a shape of a needle-shape, a sheet-shape, or a combination thereof.

Another embodiment provides a rechargeable lithium battery including a positive electrode including the positive active material; a negative electrode including a negative active material; and an electrolyte.

The positive electrode includes a current collector and a positive active material layer formed on the current collector and including a positive active material.

In the positive active material layer, a content of the positive active material may be about 90 wt% to about 98 wt% based on a total weight of the positive active material layer. In addition, the positive active material layer may further include a binder and a conductive material. Herein, each amount of the binder and the conductive material may be about 1 wt% to about 5 wt% based on a total weight of the positive active material layer.

The binder may include polyvinyl alcohol, carboxylmethyl cellulose, hydroxypropyl cellulose, diacetyl cellulose, polyvinyl chloride, polyvinylfluoride, polyvinylpyrrolidone, polyurethane, polytetrafluoroethylene, polyvinylidene fluoride, polyethylene, polypropylene, a styrene-butadiene rubber, an acrylated styrene butadiene rubber, an epoxy resin, nylon, and the like, but is not limited thereto.

Examples of the conductive material may include a carbon-based material such as natural graphite, artificial graphite, carbon black, acetylene black, ketjen black, carbon fiber and the like; a metal-based material of a metal powder or a metal fiber including copper, nickel, aluminum, silver, and the like; a conductive polymer such as a polyphenylene derivative; or a mixture thereof.

The current collector may include an aluminum foil, a nickel foil, or a combination thereof, but is not limited thereto.

The negative electrode includes a current collector and a negative active material layer formed on the current collector and including a negative active material.

The negative active material may include a material that reversibly intercalates/deintercalates lithium ions, a lithium metal, a lithium metal alloy, a material being capable of doping/dedoping lithium, or transition metal oxide.

The material that reversibly intercalates/deintercalates lithium ions may include a carbon material. The carbon material may be any generally-used carbon-based negative active material in a rechargeable lithium ion battery. Examples thereof may be crystalline carbon, amorphous carbon, or a mixture thereof. The crystalline carbon may be non-shaped, or sheet, flake, spherical, or fiber shaped natural graphite or artificial graphite. The amorphous carbon may be a soft carbon, a hard carbon, a mesophase pitch carbonization product, fired coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, SiOx (0 < x < 2), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, and not Si), Sn, SnO₂, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof, and not Sn), and the like. At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The transition metal oxide may be vanadium oxide, lithium vanadium oxide, or lithium titanium oxide.

In the negative active material layer, the negative active material may be included in an amount of about 95 wt% to about 99 wt% based on the total weight of the negative active material layer.

In an embodiment, the negative active material layer includes a binder, and optionally a conductive material. In the negative active material layer, a content of the binder may be about 1 wt% to about 5 wt% based on a total weight of the negative active material layer. When the negative active material layer further includes a conductive material, the negative active material layer includes about 90 wt% to about 98 wt% of the negative active material, about 1 wt% to about 5 wt% of the binder, and about 1 wt% to about 5 wt% of the conductive material.

The binder improves binding properties of negative active material particles with one another and with a current collector. The binder includes a non-water-soluble binder, a water-soluble binder, or a combination thereof.

The non-water-soluble binder may be selected from polyvinylchloride, carboxylated polyvinylchloride, polyvinylfluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may be a styrene-butadiene rubber (SBR), an acrylated styrene-butadiene rubber, an acrylonitrile-butadiene rubber, an acrylic rubber, a butyl rubber, a fluorine rubber, polyepichlorohydrine, polyphosphazene, polyacrylonitrile, an ethylene propylene diene copolymer, polyvinylpyridine, chlorosulfonated polyethylene, latex, a polyester resin, an acrylic resin, a phenolic resin, an epoxy resin, polyvinyl alcohol, or a combination thereof.

When the water-soluble binder is used as a negative electrode binder, a cellulose-based compound may be further used to provide viscosity as a thickner. The cellulose-based compound includes one or more of carboxymethyl cellulose, hydroxypropylmethyl cellulose, methyl cellulose, or alkali metal salts thereof. The alkali metals may be Na, K, or Li. Such a thickener may be included in an amount of about 0.1 to about 3 parts by weight based on 100 parts by weight of the negative active material.

The conductive material may include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may include at least one selected from a copper foil, a nickel foil, a stainless steel foil, a titanium foil, a nickel foam, a copper foam, a polymer substrate coated with a conductive metal, and a combination thereof.

The electrolyte includes a non-aqueous organic solvent and a lithium salt.

The non-aqueous organic solvent serves as a medium for transmitting ions taking part in the electrochemical reaction of a battery.

The non-aqueous organic solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), methyl acetate, ethyl acetate, n-propyl acetate, t-butyl acetate, methylpropionate, ethylpropionate, decanolide, mevalonolactone, caprolactone, dibutyl ether, tetraglyme, diglyme, dimethoxyethane, 2-methyltetrahydrofuran, tetrahydrofuran, cyclohexanone, ethanol, isopropyl alcohol, nitriles such as R-CN (R may be a C2 to C20 linear, branched, or cyclic hydrocarbon group and R may include a double bond, an aromatic ring, or an ether bond), and the like, amides such as dimethyl formamide, and the like, dioxolanes such as 1,3-dioxolane, and the like, sulfolanes, and the like.

The organic solvent may be used alone or in a mixture. When the organic solvent is used in a mixture, a mixing ratio may be controlled in accordance with a desirable battery performance.

In addition, the organic solvent may further include an aromatic hydrocarbon-based organic solvent. Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include an additive of vinylene carbonate or an ethylene carbonate-based compound as a cycle-life improvement additive.

Examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, fluoroethylene carbonate, and the like. The amount of the cycle-life improvement additive may be used within an appropriate range.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N, LiC₄F₉SO₃, LiClO₄, LiAlO₂, LiAlCl₄, LiN(CₓF₂ₓ₊₁SO₂)(C_{y}F_{2y+1}SO₂) wherein, x and y are natural numbers, for example an integer of 1 to 20), LiCl, Lil, and LiB(C₂O₄)₂ (lithium bis(oxalato) borate, LiBOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

The rechargeable lithium battery may further include a separator between the negative electrode and the positive electrode, depending on a type of the battery. Examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

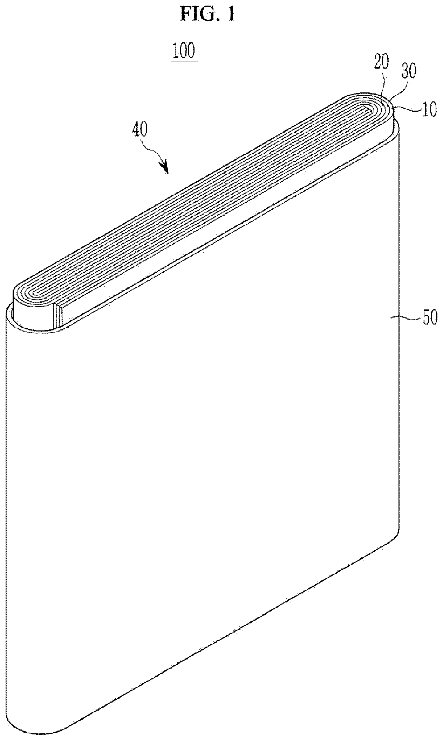

FIG. 1 is an exploded perspective view of a rechargeable lithium battery according to one embodiment. The rechargeable lithium battery according to an embodiment is illustrated as a prismatic battery but is not limited thereto and may include variously-shaped batteries such as a cylindrical battery, a pouch battery, and the like.

Referring to FIG. 1, a rechargeable lithium battery 100 according to an embodiment includes an electrode assembly 40 manufactured by winding a separator 30 interposed between a positive electrode 10 and a negative electrode 20, and a case 50 housing the electrode assembly 40. An electrolyte (not shown) may be impregnated in the positive electrode 10, the negative electrode 20, and the separator 30.

Hereinafter, examples of the present disclosure and comparative examples are described. However, the following examples are merely examples and the present invention is not limited thereto.

### (Example 1)

A mixture was prepared by mixing lithium carbonate (Li₂CO₃) and Ni_{0.55}Co_{0.25}Mn_{0.20}(OH)₂ to provide Li : (Ni + Co + Mn) at a mole ratio of 1.01 : 1.00. Herein, Ni_{0.55}Co_{0.25}Mn_{0.20}(OH)₂ was obtained by mixing a compound 1A and a compound 2A having the same composition but different particle diameters at a weight ratio of 8 : 2.

The mixture was subjected to a first heat-treating under conditions of heating at 5 °C /min from 25 °C to 900 °C, maintaining at 900 °C for 2 hours, and then cooling at 5 °C /min until 25 °C to provide a first fired product including secondary particles of a first compound (Li_{1.01}Ni_{0.55}Co_{0.25}Mn_{0.20}O₂) and secondary particles of a second compound (Li_{1.01}Ni_{0.55}Co_{0.25}Mn_{0.20}O₂). Meanwhile, the first heat-treating process was performed under an air atmosphere in an insertion height of 5 cm.

The first fired product was subjected to a second heat-treating under conditions of heating at 5 °C /min from 25 °C to 850 °C, maintaining at 850 °C for 10 hours, and then cooling down at 5 °C/min until 25 °C to provide a positive active material in which the first compound (LiNi_{0.55}Co_{0.25}Mn_{0.20}O₂) and the second compound (LiNi_{0.55}Co_{0.25}Mn_{0.20}O₂) are mixed at a weight ratio of 8 : 2. Meanwhile, the second heat-treating was performed under an oxygen (O₂) atmosphere.

In this case, an average particle diameter (D50) of the secondary particles of the first compound was 20 µm, an average particle diameter (D50) of the secondary particles of the second compound was 3 µm, and an average of the average particle diameters (D50) of the secondary particles of the first compound and the secondary particles of the second compound was 17 µm. Meanwhile, the secondary particles of the second compound had a shape of combining a long needle shape and a sheet shape.

### (Example 2)

A positive active material in which the first compound (LiNi_{0.55}Co_{0.20}Mn_{0.25}O₂) and the second compound (LiNi_{0.55}Co_{0.20}Mn_{0.25}O₂) are mixed at a weight ratio of 8 : 2 was prepared in accordance with the same procedure as in Example 1, except that each of the compound 1A and the compound 2A has a composition of Ni_{0.55}Co_{0.20}Mn_{0.25}(OH)₂.

In this case, an average particle diameter (D50) of the secondary particles of the first compound was 20 µm, an average particle diameter (D50) of the secondary particles of the second compound was 3 µm, and an average of average particle diameters (D50) of the secondary particles of the first compound and the secondary particles of the second compound was 17 µm. Meanwhile, the secondary particles of the second compound has a shape of combining a long needle shape and a sheet shape.

### (Comparative Example 1)

A mixture was prepared by mixing lithium carbonate (Li₂CO₃) and a compound 1A Ni_{0.55}Co_{0.25}Mn_{0.20}(OH)₂ to provide Li : (Ni + Co + Mn) at a mole ratio of 1.03 : 1.

The mixture was subjected to a heat treatment under conditions of heating at 2.5 °C/min from 25 °C to 850 °C, maintaining at 850 °C for 20 hours, and then cooling down at 2.5 °C/min until 25 °C to provide a first compound (Li_{1.03}Ni_{0.55}Co_{0.25}Mn_{0.20}O₂). Meanwhile, the first heat-treating process was performed in an insertion height of 5 cm under an air atmosphere.

Lithium carbonate (Li₂CO₃) and the secondary particles of the compound 2A (Ni_{0.55}Co_{0.25}Mn_{0.20}(OH)₂) having a combination of long needle shapes and sheet shapes are mixed to provide Li : (Ni + Co + Mn) at a mole ratio of 1.00 : 1, and the mixture was subjected to a heat treatment under conditions of heating at 2.5 °C/min from 25 °C to 750 °C, maintaining at 750 °C for 15 hours, and then cooling down at 5 °C/min until 25 °C to provide a second compound represented by Li_{1.00}Ni_{0.55}Co_{0.25}Mn_{0.20}O₂. The process was performed under an air atmosphere.

The first compound and the second compound are mixed at a weight ratio of 8 : 2, and the mixture was subjected to a third heat treatment under a condition of 400°C to provide a positive active material including the first compound and the second compound. Herein, the the secondary particles of first compound has an average particle diameter (D50) of 20 µm, and the secondary particles of the second compound has an average particle diameter (D50) of 3 µm.

### Evaluation Example 1: Comparison of Ni Atom Concentration of Surface Layer of First Compound and Ni Atom Concentration of Core

### * X-ray Photoelectron Spectroscopy (XPS) Analysis

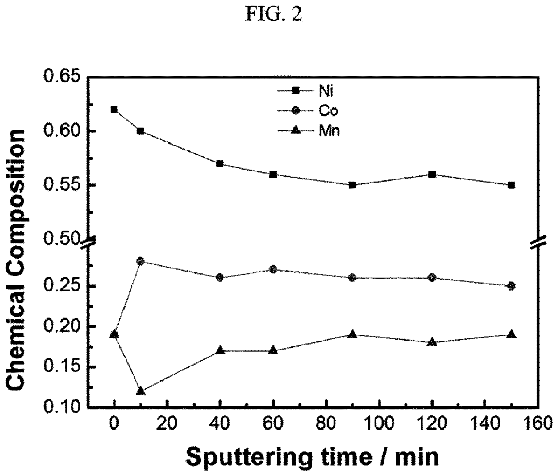

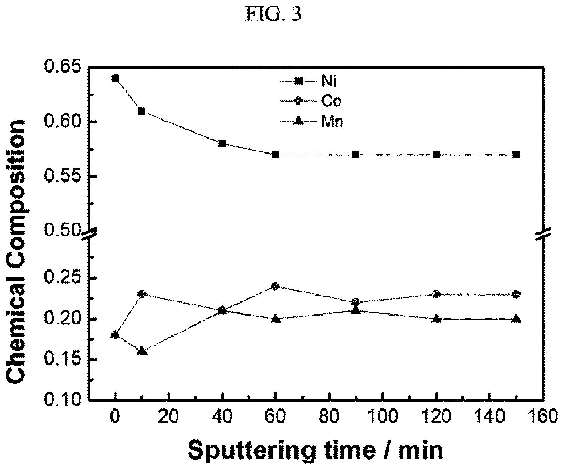

The the secondary particles of first compounds obtained from Examples 1 and 2 and Comparative Example 1 are subjected to a surface sputtering, and then performed with a X-ray photoelectron spectroscopy to provide an atom concentration distribution of the first compound. The sputtering uses argon ion and applies a sputtering rate of 0.5 nm/min (SiO₂ conversion). The results of analyzing the average Ni, Co and Mn amounts of the entire first compound are shown in Table 1, and the results of analyzing the Ni, Co, and Mn amount depending upon the sputtering time are shown in Tables 2 to 4. In addition, the results of analyzing the Ni, Co, and Mn amounts of the first compounds obtained from Examples 1 and 2 depending upon a sputtering time are shown in FIGS. 2 and 3.

Meanwhile, the atom concentration distribution on a sputtering time of 0 minute to 10 minutes is corresponding to a surface layer (depth of 200 nm from the surface).

**[Table 1]**

| Ni+Co+Mn=1 | Ni (at %) | Co (at %) | Mn (at %) |
|---|---|---|---|
| First compound of Example 1 (Li_{1.01}Ni_{0.55}Co_{0.25}Mn_{0.20}O₂) | 56 | 25 | 19 |
| First compound of Example 2 (Li_{1.01}Ni_{0.55}Co_{0.20}Mn_{0.25}O₂) | 56 | 18 | 26 |
| First compound of Comparative Example 1 (Li_{1.03}Ni_{0.55}Co_{0.25}Mn_{0.20}O₂) | 56 | 26 | 18 |

As shown in Table 1, Examples 1 and 2 and Comparative Example 1 have the same Ni atom concentration of 56 at% from the surface of the material up to a depth of 200µm.

**[Table 2] Example 1: Sputtering results of XPS**

| Sputtering time (min) | Ni (unit: at%) | Co (unit: at%) | Mn (unit: at%) |
|---|---|---|---|
| 0 | 62 | 19 | 19 |
| 10 | 60 | 28 | 12 |
| 40 | 57 | 26 | 17 |
| 60 | 56 | 27 | 17 |
| 90 | 55 | 26 | 19 |
| 120 | 56 | 26 | 18 |
| 150 | 55 | 25 | 20 |

**[Table 3] Example 2: Sputtering results of XPS**

| Sputtering time (min) | Ni (unit: at%) | Co (unit: at%) | Mn (unit: at%) |
|---|---|---|---|
| 0 | 64 | 18 | 18 |
| 10 | 61 | 23 | 16 |
| 40 | 58 | 21 | 21 |
| 60 | 57 | 24 | 19 |
| 90 | 57 | 22 | 21 |
| 120 | 57 | 23 | 20 |
| 150 | 57 | 23 | 20 |

**[Table 4] Comparative Example 1: Sputtering results of XPS**

| Sputtering time (min) | Ni (unit: at%) | Co (unit: at%) | Mn (unit: at%) |
|---|---|---|---|
| 0 | 56 | 26 | 18 |
| 10 | 57 | 27 | 16 |
| 40 | 53 | 26 | 21 |
| 60 | 54 | 26 | 20 |
| 90 | 54 | 25 | 21 |
| 120 | 57 | 23 | 20 |
| 150 | 55 | 25 | 20 |

As shown in Tables 2 and 3 and FIGS. 2 and 3, it is confirmed that the positive active materials obtained from Examples 1 and 2 have the surface layer (Tables 2 and 3, sputtering time of less than or equal to 10 minutes) Ni atom concentrations of 60, 61 Ni at%, respectively, but the positive active material obtained from Comparative Example 1 has the surface layer (Table 4, sputtering time of less than or equal to 10 minutes) Ni atom concentration of less than 58 at%.

In other words, referring to Tables 2 to 4, the first compounds obtained from Examples 1 and 2 have a higher Ni atom concentration of the surface layer than that of the core, on the other hand, the first compound obtained from Comparative Example 1 has substantially same Ni atom concentration between the surface layer and the core.

### * EDS (Energy dispersive X-ray spectroscopy) Analysis

The positive active materials obtained from Examples 1 and 2, and Comparative Example 1 are analyzed by EDS to measure the entire Ni, Co, Mn atom amounts (at%) of the positive active materials. The results are shown in Table 5.

**[Table 5]**

| | Ni (at%) | Co (at%) | Mn (at%) |
|---|---|---|---|
| Example 1 | 56.7 | 24.9 | 18.4 |
| Example 2 | 55.4 | 20.2 | 24.4 |
| Comparative Example 1 | 56.6 | 24.8 | 18.6 |

As shown in Table 5, Ni, Co, Mn average atom concentrations of the positive active materials obtained from Examples 1 and 2 are substantially equivalent to the XPS analysis results shown in Table 1.

### Evaluation Example 2: Cation Mixing Analysis

The positive active material powder obtained from Examples 1 and 2, and Comparative Example 1 is subjected to a XRD analysis.

The XRD analysis uses an analyzer (Xpert PRO, Philips / Power 3kW), is performed by Rietveld analysis, and an excitation source for the XRD analysis uses CuK-alpha characteristic X-ray wavelength of 1.541Å. The analysis results are shown in Table 6.

**[Table 6]**

| | Ni of Li site (%) |
|---|---|
| Example 1 | 2.4 |
| Example 2 | 2.7 |
| Comparative Example 1 | 4.8 |

Referring to Table 6, it is confirmed that the cation mixing of the positive active materials obtained from Examples 1 and 2 was less than or equal to 3%, which is improved compared with Comparative Example 1.

### Example 3: Manufacture of Test Cell

94 wt% of positive active material prepared in Example 1, 3 wt% of ketjen black, and 3 wt% of polyvinylidene fluoride were mixed in N-methyl pyrrolidone solvent to prepare positive active material slurry. The positive active material slurry was coated on an Al foil followed by drying and compressing the same to manufacture a positive electrode. The 2032-type a half-cell was manufactured by a conventional method using the positive electrode, a lithium metal counter electrode, and an electrolyte. The electrolyte was a mixed solvent (50: 50 volume ratio) of ethylene carbonate and dimethyl carbonate in which 1.0 M LiPF₆ was dissolved.

### Example 4: Manufacture of Test Cell

A 2032-type a half-cell was manufactured according to the same method as Example 3, except that the positive active material prepared in Example 2 was used.

### Comparative Example 2: Manufacture of Test Cell

A 2032-type a half-cell was manufactured according to the same method as Example 3, except that the positive active material prepared in Comparative Example 1 was used.

### Evaluation Example 3: Measurement of Initial Charge and Discharge Capacity

The half cells obtained from Examples 3 and 4 and Comparative Example 2 are charged and discharged at 0.2 C for one time. Charge capacity, discharge capacity, and charge and discharge efficiency thereof are shown in Table 7.

**[Table 7]**

| | Charge capacity (mAh/g) | Discharge capacity (mAh/g) | Charge and discharge efficiency (%) |
|---|---|---|---|
| Example 3 | 186.4 | 177.3 | 95.1 |
| Example 4 | 186.5 | 176.8 | 94.8 |
| Comparative Example 2 | 186.8 | 166.8 | 89.3 |

As shown in Table 7, the half cells obtained from Examples 3 and 4 have improved charge and discharge efficiency, compared with the half cell obtained from Comparative Example 2.

### Evaluation Example 4: Evaluation of Cycle-life Characteristics

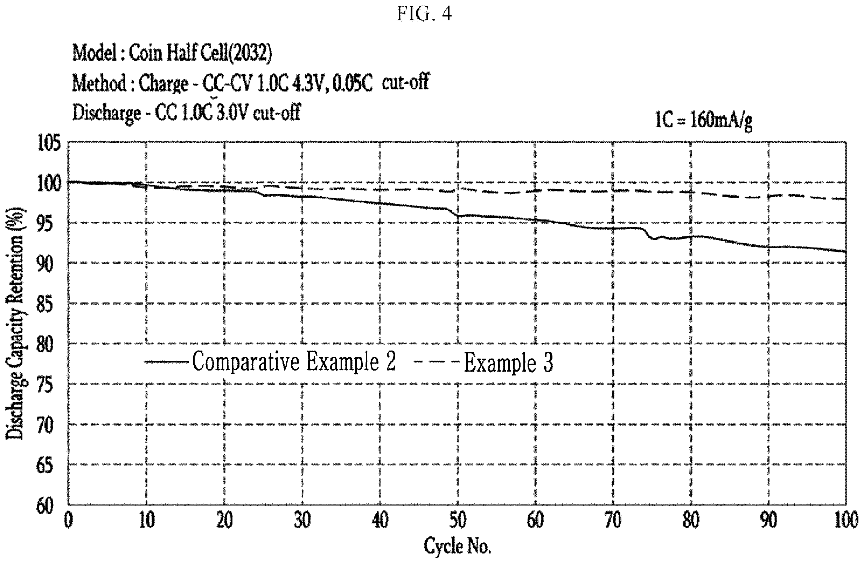

The half cells obtained from Example 3 and Comparative Example 2 are charged at room temperature under a constant current-constant voltage condition at about 1.0 C (1C=160 mAh/g), about 4.3V and about 0.05 C cut-off and discharged under a constant current condition at about 1.0 C, about 3.0V cut-off, which is referred to as 1 cycle, and repeatedly charged and discharged for about 100 cycles, and a discharge capacity at each cycle is measured to provide a capacity retention. The results are shown in FIG. 4.

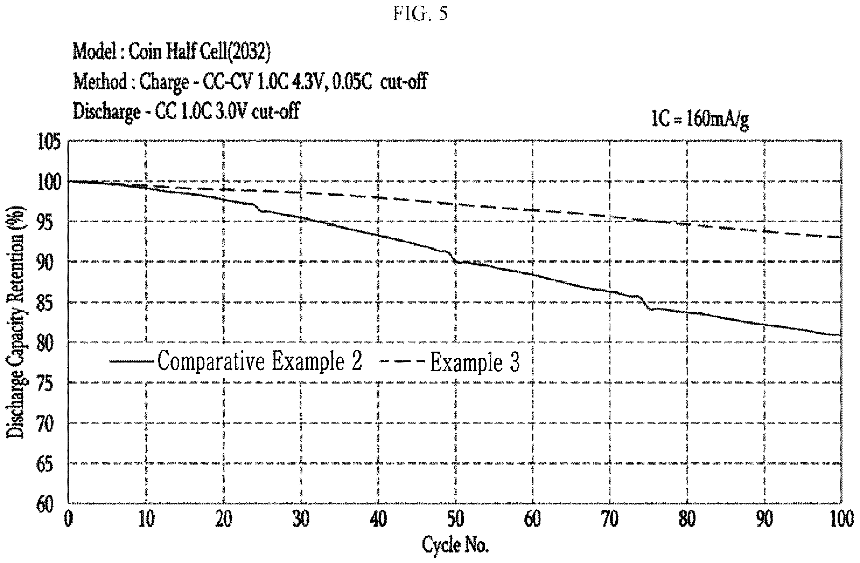

In addition, the half cell is charged at a high temperature of 45° C under a constant current-constant voltage condition at 1.0 C (1 C=160 mAh/g), 4.3 V, and 0.05 C cut-off and discharged under a constant current condition at about 1.0 C, about 3.0V cut-off, which is referred to as 1 cycle, and is repeatedly charged and discharged for total 100 cycles to measure a discharge capacity, and then a capacity retention is obtained. The results are shown in FIG. 5.

As shown in FIGS. 4 and 5, the half cell obtained from Example 3 has improved discharge capacity retention at a room temperature and a high temperature, compared with the half cell according to Comparative Example 3.

## Claims

1. A positive active material for a rechargeable lithium battery, comprising
a first compound represented by Chemical Formula 1 in form of a secondary particle in which a plurality of primary particles is assembled and a second compound represented by Chemical Formula 2 in form of a secondary particle in which a plurality of primary particles is assembled, wherein the secondary particle of the second compound has a smaller average particle diameter (D50) than the secondary particle of the first compound measured by using a scanning electron microscope (SEM),
at least one of the secondary particle of the first compound and the secondary particle of the second compound comprises a core and a surface layer surrounding the core,
wherein a Ni atom concentration (at%) of the metals except Li of the surface layer is higher than a Ni atom concentration (at%) of the metals except Li of the core, and
a cation mixing is less than or equal to 3%, wherein cation mixing means a ratio (%) of a portion of nickel ions (Ni²⁺) mixed to a Li site within the crystal lattice of the positive active material measured by a X-ray diffraction (XRD) analysis and determined by Rietveld analysis:
[Chemical Formula 1] Liₐ₁Niₓ₁Co_{y1}M¹_{1-x1-y1}O₂
wherein, in Chemical Formula 1, 0.9 ≤ a1 ≤ 1.05, 0.3 ≤ x1 ≤ 0.95, 0.1 ≤ y1 ≤0.3, and M¹ is at least one metal element selected from Mn, Al, Cr, Fe, V, Mg, Ti, Zr, Nb, Mo, W, Cu, Zn, Ga, In, Sn, La, and Ce,
[Chemical Formula 2] Liₐ₂Niₓ₂CO_{y2}M²_{1-x2-y2}O₂
wherein, in Chemical Formula 2, 0.9 ≤ a2 ≤ 1.05, 0.3 ≤ x2 ≤ 0.95, 0.1≤ y2 ≤ 0.3, and M² is at least one metal element selected from Mn, Al, Cr, Fe, V, Mg, Ti, Zr, Nb, Mo, W, Cu, Zn, Ga, In, Sn, La, and Ce.

2. The positive active material of claim 1, wherein the positive active material has a Ni atom concentration of the metals except Li ranging from 30 at% to 60 at%.

3. The positive active material of claim 1 or 2, wherein a ratio of the Ni atom concentration of the metals except Li of the surface layer relative to the Ni atom concentration of the metals except Li of the core is 1.03 to 1.20.

4. The positive active material of any one of the preceding claims, wherein the secondary particle of the first compound has an average particle diameter (D50) of 15µm to 20µm measured by using a scanning electron microscope (SEM).

5. The positive active material of any one of the preceding claims, wherein the secondary particle of the second compound has an average particle diameter (D50) of 2µm to 5µm measured by using a scanning electron microscope (SEM).

6. The positive active material of any one of the preceding claims, wherein the first compound and the second compound are mixed in a weight ratio of 90 : 10 to 50 : 50.

7. The positive active material of any one of the preceding claims, wherein the secondary particle of the second compound has a needle-shape or a sheet-shape, wherein the average particle diameter measured by using a scanning electron microscope (SEM) refers to the longest length of the needle-shaped or a sheet-shaped secondary particle.

8. The positive active material of any one of the preceding claims, wherein the surface layer is a region corresponding to a depth of 200 nm from the surface.

9. A method of preparing a positive active material, comprising the steps of:
mixing a compound 1A represented by Chemical Formula 1A, a compound 2A represented by Chemical Formula 2A, wherein the particles of compound 2A have a smaller particle diameter than the particles of compound 1A, and a lithium salt to prepare a mixture;
first heat-treating the mixture under a rapid temperature-increasing condition to prepare a first fired product comprising residual lithium; and
second heat-treating the first fired product to prepare the positive active material of claim 1 , with
[Chemical Formula 1A] Niₓ₁Co_{y1}M¹_{1-x1-y1}(OH)₂
wherein, in Chemical Formula 1A, 0.3 ≤ x1 ≤ 0.95, 0.1 ≤ y1 ≤0.3, and M¹ is at least one metal element selected from Mn, Al, Cr, Fe, V, Mg, Ti, Zr, Nb, Mo, W, Cu, Zn, Ga, In, Sn, La, and Ce,
[Chemical Formula 2A] Niₓ₂Co_{y2}M²_{1-x2-y2}(OH)₂
wherein, in Chemical Formula 2A, 0.3 ≤ x2 ≤ 0.95, 0.1 ≤ y2 ≤0.3, and M² is at least one metal element selected from Mn, Al, Cr, Fe, V, Mg, Ti, Zr, Nb, Mo, W, Cu, Zn, Ga, In, Sn, La, and Ce.

10. The method of claim 9, wherein the compound 1A and the compound 2A are mixed in a weight ratio of 90 : 10 to 50 : 50.

11. The method of claim 9 or 10, wherein in the mixture, a mole ratio of Li/(Ni + Co + Mn) is greater than or equal to 0.99.

12. The method of claim 9, wherein the rapid temperature-increasing condition comprises increasing a temperature at about 4 °C/min to about 6 °C/min.

13. The method of claim 9, wherein the first heat-treating comprises a process of maintaining the mixture in an air atmosphere or an oxidizing gas atmosphere at about 800 °C to about 1000 °C for about 1 hour to about 4 hours.

14. The method of any one of claims 9 - 13, wherein the particles of the compound 2A has a needle-shape or a sheet-shape.

15. A rechargeable lithium battery, comprising
a positive electrode comprising a positive active material of claim 1;
a negative electrode comprising a negative active material; and
an electrolyte.

## Patentansprüche

1. Positives aktives Material für eine wiederaufladbare Lithiumbatterie, umfassend
eine erste Verbindung, die durch die chemische Formel 1 dargestellt wird, in Form eines Sekundärteilchens, in dem eine Vielzahl von Primärteilchen zusammengesetzt ist, und eine zweite Verbindung, die durch die chemische Formel 2 dargestellt wird, in Form eines Sekundärteilchens, in dem eine Vielzahl von Primärteilchen zusammengesetzt ist, wobei das Sekundärteilchen der zweiten Verbindung einen kleineren durchschnittlichen Teilchendurchmesser (D50) aufweist als das Sekundärteilchen der ersten Verbindung, gemessen unter Verwendung eines Rasterelektronenmikroskops (SEM),
mindestens eines der Sekundärteilchen der ersten Verbindung und der Sekundärteilchen der zweiten Verbindung einen Kern und eine den Kern umgebende Oberflächenschicht umfasst,
wobei eine Ni-Atomkonzentration (at%) der Metalle außer Li der Oberflächenschicht höher ist als eine Ni-Atomkonzentration (at%) der Metalle außer Li des Kerns, und
eine Kationenmischung weniger als oder gleich 3 % ist, wobei Kationenmischung ein Verhältnis (%) eines Anteils von Nickelionen (Ni²⁺) bedeutet, die mit einer Li-Stelle innerhalb des Kristallgitters des positiv aktiven Materials gemischt sind, gemessen durch eine Röntgenbeugungsanalyse (XRD) und bestimmt durch eine Rietveld-Analyse:
[Chemische Formel 1] Lia₁Niₓ₁CO_{y1}M¹_{1-x1-y1}O₂
wobei in der chemischen Formel 1 0,9 ≤ a1 ≤ 1,05, 0,3 ≤ x1 ≤ 0,95, 0,1 ≤ y1 ≤0,3 und M¹ mindestens ein Metallelement ist, das aus Mn, Al, Cr, Fe, V, Mg, Ti, Zr, Nb, Mo, W, Cu, Zn, Ga, In, Sn, La und Ce ausgewählt ist,
[Chemische Formel 2] Liₐ₂Niₓ₂Co_{y2}M²_{1-x2-y2}O₂
wobei in der chemischen Formel 2 0,9 ≤ a2 ≤ 1,05, 0,3 ≤ x2 ≤ 0,95, 0,1 ≤ y2 ≤ 0,3 und M² mindestens ein Metallelement ist, das aus Mn, Al, Cr, Fe, V, Mg, Ti, Zr, Nb, Mo, W, Cu, Zn, Ga, In, Sn, La und Ce ausgewählt ist.

2. Positives aktives Material nach Anspruch 1, wobei das positive aktive Material eine Ni-Atomkonzentration der Metalle außer Li im Bereich von 30 at% bis 60 at% aufweist.

3. Positives aktives Material nach Anspruch 1 oder 2, wobei ein Verhältnis der Ni-Atomkonzentration der Metalle außer Li der Oberflächenschicht zur Ni-Atomkonzentration der Metalle außer Li des Kerns 1,03 bis 1,20 beträgt.

4. Positives aktives Material nach einem der vorhergehenden Ansprüche, wobei das Sekundärteilchen der ersten Verbindung einen durchschnittlichen Teilchendurchmesser (D50) von 15µm bis 20µm aufweist, gemessen unter Verwendung eines Rasterelektronenmikroskops (SEM).

5. Positives aktives Material nach einem der vorhergehenden Ansprüche, wobei das Sekundärteilchen der zweiten Verbindung einen durchschnittlichen Teilchendurchmesser (D50) von 2 µm bis 5 µm aufweist, gemessen mit einem Rasterelektronenmikroskop (SEM).

6. Positives aktives Material nach einem der vorhergehenden Ansprüche, wobei die erste Verbindung und die zweite Verbindung in einem Gewichtsverhältnis von 90 : 10 bis 50 : 50 gemischt sind.

7. Positives aktives Material nach einem der vorhergehenden Ansprüche, wobei das Sekundärteilchen der zweiten Verbindung nadel- oder blattförmig ist, wobei der durchschnittliche Teilchendurchmesser, der unter Verwendung eines Rasterelektronenmikroskops (SEM) gemessen wird, sich auf die längste Länge des nadel- oder blattförmigen Sekundärteilchens bezieht.

8. Positives aktives Material nach einem der vorhergehenden Ansprüche, wobei die Oberflächenschicht ein Bereich ist, der einer Tiefe von 200 nm von der Oberfläche entspricht.

9. Verfahren zur Herstellung eines positiven aktiven Materials, das die folgenden Schritte umfasst:
Mischen einer Verbindung 1A, die durch die chemische Formel 1A dargestellt wird, einer Verbindung 2A, die durch die chemische Formel 2A dargestellt wird, wobei die Teilchen der Verbindung 2A einen kleineren Teilchendurchmesser aufweisen als die Teilchen der Verbindung 1A, und eines Lithiumsalzes, um eine Mischung herzustellen;
erste Wärmebehandlung der Mischung unter einer schnell ansteigenden Temperatur, um ein erstes gebranntes Produkt herzustellen, das Restlithium enthält; und
zweite Wärmebehandlung des ersten gebrannten Produkts zur Herstellung des positiven aktiven Materials nach Anspruch 1,
mit
[Chemische Formel 1A] Niₓ₁Co_{y1}M¹_{1-x1-y1}(OH)₂
wobei in der chemischen Formel 1A0,3 ≤ x1 ≤ 0,95, 0,1 ≤ y1 ≤0,3 und M¹ mindestens ein Metallelement, ausgewählt aus Mn, Al, Cr, Fe, V, Mg, Ti, Zr, Nb, Mo, W, Cu, Zn, Ga, In, Sn, La und Ce, ist,
[Chemische Formel 2A] Niₓ₂Co_{y2}M²_{1-x2-y2}(OH)₂
wobei in der chemischen Formel 2A0,3 ≤ x2 ≤ 0,95, 0,1 ≤ y2 ≤0,3 und M² mindestens ein Metallelement ist, das aus Mn, Al, Cr, Fe, V, Mg, Ti, Zr, Nb, Mo, W, Cu, Zn, Ga, In, Sn, La und Ce ausgewählt ist.

10. Verfahren nach Anspruch 9, wobei die Verbindung 1A und die Verbindung 2A in einem Gewichtsverhältnis von 90 : 10 bis 50 : 50 gemischt werden.

11. Verfahren nach Anspruch 9 oder 10, wobei in der Mischung das Molverhältnis von Li/(Ni + Co + Mn) größer oder gleich 0,99 ist.

12. Verfahren nach Anspruch 9, wobei der Zustand der schnellen Temperaturerhöhung eine Temperaturerhöhung von etwa 4 ° C/min bis etwa 6 ° C/min umfasst.

13. Verfahren nach Anspruch 9, wobei die erste Wärmebehandlung ein Verfahren umfasst, bei dem die Mischung in einer Luftatmosphäre oder einer oxidierenden Gasatmosphäre bei etwa 800 °C bis etwa 1000 °C für etwa 1 Stunde bis etwa 4 Stunden gehalten wird.

14. Verfahren nach einem der Ansprüche 9 bis 13, wobei die Teilchen der Verbindung 2A eine Nadel- oder Blattform aufweisen.

15. Eiederaufladbare Lithiumbatterie, umfassend
eine positive Elektrode, aufweisend ein positives aktives Material nach Anspruch 1;
eine negative Elektrode, aufweisend ein negatives aktives Material; und
einen Elektrolyt.

## Revendications

1. Matériau actif positif pour une batterie rechargeable au lithium, comprenant
un premier composé représenté par la formule chimique 1 sous la forme d'une particule secondaire dans laquelle une pluralité de particules primaires est assemblée, et un deuxième composé représenté par la formule chimique 2 sous la forme d'une particule secondaire dans laquelle une pluralité de particules primaires est assemblée, dans lequel la particule secondaire du deuxième composé a une granulométrie moyenne (D50), mesurée par utilisation d'un microscope électronique à balayage (MEB), inférieure à celle de la particule secondaire du premier composé,
au moins l'une parmi la particule secondaire du premier composé et la particule secondaire du deuxième composé comprend un coeur et une couche de surface entourant le coeur,
dans lequel la concentration d'atomes Ni (en % atomiques) des métaux à l'exception de Li de la couche de surface est supérieure à la concentration d'atomes Ni (en % atomiques) des métaux à l'exception de Li du coeur, et
le mélange de cations est inférieur ou égal à 3 %, lequel mélange de cations signifie le rapport (%) d'une portion des ions nickel (Ni²⁺) mélangés à un site de Li à l'intérieur du réseau cristallin du matériau actif positif mesuré par une analyse de diffraction des rayons X (XRD) et déterminé par la méthode de Rietveld :
[formule chimique 1] Liₐ₁Niₓ₁Co_{y1}M¹_{1-X1-y1}O₂
dans lequel, dans la formule chimique 1, 0,9 ≤ a1 ≤ 1,05, 0,3 ≤ x1 ≤ 0,95, 0,1 ≤ y1 ≤ 0,3, et M¹ est au moins un élément métallique choisi parmi Mn, Al, Cr, Fe, V, Mg, Ti, Zr, Nb, Mo, W, Cu, Zn, Ga, In, Sn, La et Ce,
[formule chimique 2] Liₐ₂Niₓ₂CO_{y2}M²_{1-x2-y2}O₂
dans lequel, dans la formule chimique 2, 0,9 ≤ a2 ≤ 1,05, 0,3 ≤ x2 ≤ 0,95, 0,1 ≤ y2 ≤ 0,3, et M² est au moins un élément métallique choisi parmi Mn, Al, Cr, Fe, V, Mg, Ti, Zr, Nb, Mo, W, Cu, Zn, Ga, In, Sn, La et Ce.

2. Matériau actif positif selon la revendication 1, lequel matériau actif positif a une concentration d'atomes Ni des métaux à l'exception de Li située dans la plage allant de 30 % atomiques à 60 % atomiques.

3. Matériau actif positif selon la revendication 1 ou 2, dans lequel le rapport de la concentration d'atomes Ni des métaux à l'exception de Li de la couche de surface à la concentration d'atomes Ni des métaux à l'exception de Li du coeur est de 1,03 à 1,20.

4. Matériau actif positif selon l'une quelconque des revendications précédentes, dans lequel la particule secondaire du premier composé a une granulométrie moyenne (D50), mesurée par utilisation d'un microscope électronique à balayage (MEB), de 15 µm à 20 µm.

5. Matériau actif positif selon l'une quelconque des revendications précédentes, dans lequel la particule secondaire du deuxième composé a une granulométrie moyenne (D50), mesurée par utilisation d'un microscope électronique à balayage (MEB), de 2 µm à 5 µm.

6. Matériau actif positif selon l'une quelconque des revendications précédentes, dans lequel le premier composé et le deuxième composé sont mélangés en un rapport de mélange de 90/10 à 50/50.

7. Matériau actif positif selon l'une quelconque des revendications précédentes, dans lequel la particule secondaire du deuxième composé a une forme aciculaire ou une forme de feuille, dans lequel la granulométrie moyenne, mesurée par utilisation d'un microscope électronique à balayage (MEB), se réfère à la longueur la plus grande de la particule secondaire de forme aciculaire ou en forme de feuille.

8. Matériau actif positif selon l'une quelconque des revendications précédentes, dans lequel la couche de surface est une région correspondant à une profondeur de 200 nm par rapport à la surface.

9. Procédé de préparation d'un matériau actif positif, comprenant les étapes consistant à :
mélanger un composé 1A représenté par la formule chimique 1A, un composé 2A représenté par la formule chimique 2A, parmi lesquels les particules du composé 2A ont une granulométrie inférieure à celle des particules du composé 1A, et un sel de lithium, pour préparer un mélange ;
réaliser un premier traitement à la chaleur du mélange dans des conditions de montée rapide en température pour préparer un premier produit cuit comprenant du lithium résiduel ; et
réaliser un deuxième traitement à la chaleur du premier produit cuit pour préparer le matériau actif positif de la revendication 1, avec
[formule chimique 1A] Niₓ₁Co_{y1}M¹_{1-x1-y1}(OH)₂
dans lequel, dans la formule chimique 1A, 0,3 ≤ x1 ≤ 0,95, 0,1 ≤ y1 ≤ 0,3, et M¹ est au moins un élément métallique choisi parmi Mn, Al, Cr, Fe, V, Mg, Ti, Zr, Nb, Mo, W, Cu, Zn, Ga, In, Sn, La et Ce,
[formule chimique 2A] Niₓ₂Co_{y2}M²_{1-x2-y2}(OH)₂
dans lequel, dans la formule chimique 2A, 0,3 ≤ x2 ≤ 0,95, 0,1 ≤ y2 ≤ 0,3, et M² est au moins un élément métallique choisi parmi Mn, Al, Cr, Fe, V, Mg, Ti, Zr, Nb, Mo, W, Cu, Zn, Ga, In, Sn, La et Ce.

10. Procédé selon la revendication 9, dans lequel le composé 1A et le composé 2A sont mélangés en un rapport en poids de 90/10 à 50/50.

11. Procédé selon la revendication 9 ou 10, dans lequel, dans le mélange, le rapport molaire Li/ (Ni+Co+Mn) est supérieur ou égal à 0,99.

12. Procédé selon la revendication 9, dans lequel la condition de montée rapide en température comprend l'augmentation de la température à une vitesse d'environ 4°C/min à environ 6°C/min.

13. Procédé selon la revendication 9, dans lequel le premier traitement à la chaleur comprend un traitement de maintien du mélange dans une atmosphère d'air ou une atmosphère de gaz oxydant à une température d'environ 800°C à environ 1000°C pendant environ 1 heure à environ 4 heures.

14. Procédé selon l'une quelconque des revendications 9 à 13, dans lequel les particules du composé 2A ont une forme aciculaire ou une forme de feuille.

15. Batterie rechargeable au lithium, comprenant
une électrode positive comprenant un matériau actif positif de la revendication 1 ;
une électrode négative comprenant un matériau actif négatif ; et
un électrolyte.
